# EUROPÄISCHE PATENTANMELDUNG

(11) **EP 0 523 429 A1**
(43) Veröffentlichungstag der Anmeldung: **20.01.1993**
(21) Anmeldenummer: 92110902.1
(22) Anmeldetag: 27.06.1992
(51) Int. Cl.: B32B 25/08, G10K 11/16

(54) **Elastische Entdröhnbelagsbahn für Wände von schallabgebenden Gehäusen**

(30) Priorität: 16.07.1991 DE 4123509
(71) Anmelder: Continental Aktiengesellschaft, D-30165 Hannover (DE)
(72) Erfinder: Kerwel, Wolfgang, W-3000 Hannover 61 (DE); Kerwel, Barbara, W-3410 Northeim 23 (DE)

(57) **Zusammenfassung**

Eine elastische Entdröhnbelagsbahn für Wände von schallabgebenden Gehäusen, insbesondere metallischen Gehäusewänden von Fahrzeugen oder Maschinen, ist aus mehreren Schichten aufgebaut. Um eine Entdröhnbelagsbahn mit guter Witterungs- und Temperaturbeständigkeit zu schaffen, die sicher an geräuschabgebenden Gehäusewänden befestigbar ist und eine gute schalldämpfende Wirkung aufweist, besteht die Entdröhnbelagsbahn aus einer Hauptschicht (2) aus SBR-Gummi, einer mit der Hauptschicht (2) zusammenvulkanisierten Kontaktschicht (4) aus CR-Gummi und einem mit der Kontaktschicht (4) verklebten beidseitigem Haftkleberband (5), das auf der freien Seite mit einer abziehbaren Schutzfolie (6) versehen ist.

## Beschreibung

Die Erfindung betrifft eine elastische Entdröhnbelagsbahn für Wände von schallabgebenden Gehäusen, insbesondere metallischen Gehäusewänden von Fahrzeugen oder Maschinen, die aus mehreren Schichten aufgebaut ist.

Zur Verringerung der Lärmbelästigung der Umwelt sind Entdröhnbeläge für schallabgebende Gehäusewände bekannt. Diese Entdröhnbeläge werden entweder als zähflüssige Beschichtungsmassen aufgetragen oder als mehrschichtige Entdröhnbelagsbahnen auf die Gehäusewände montiert oder aufgeklebt.

Aus der DE-PS 30 22 461 ist eine mehrschichtige Entdröhnbelagsbahn bekannt, die im wesentlichen eine Schaumstoffschicht aus Polypropylen aufweist, die mit einem zugsteifen Maschengebilde verschweißt ist. Auf der Unterseite der Schaumstoffschicht ist eine Beschichtung aus einem dauerplastischen Schmelzhaftkleber angeordnet, dessen freie Seite mit einer Schutzfolie abgedeckt ist. Der Schmelzhaftkleber macht eine Wärmeeinwirkung zum Aktivieren notwendig.

Der Erfindung liegt die Aufgabe zugrunde, eine Entdröhnbelagsbahn zu schaffen, die bei guter Witterungs- und Temperaturbeständigkeit sicher an geräuschabgebenden Gehäusewänden befestigbar ist und eine gute Schalldämmwirkung aufweist.

Die Aufgabe wird erfindungsgemäß durch die in Anspruch 1 genannten Merkmale gelöst. Der wesentliche Bestandteil der Entdröhnbelagsbahn ist die Hauptschicht aus SBR-Gummi. SBR (Styrol-Butadien-Rubber) ist besonders witterungs- und temperaturbeständig sowie lackierfähig. Die Kontaktschicht besteht aus CR-Kautschuk (Chloropren-Kautschuk), der sehr gut kalt verklebbar ist. Dadurch ist das Doppelklebeband mit einer äußerst festen und dauerhaften Verbindung an die Gummiplatte anklebbar. Die gute Verklebbarkeit des CR-Kautschuks wird für das Aufbringen des doppelseitigen Haftklebebandes ausgenutzt. Ein zusätzlicher Kleberauftrag ist nicht notwendig.

Die Entdröhnbelagsbahn wird dem Fahrzeug- oder Maschinenausrüster geliefert, der die entsprechenden geräuschabgebenden Gehäusewände in einfacher Weise belegen kann. Dabei wird eine äußerst gute selbständige Haftung an der jeweiligen Gehäusewand erreicht, ohne daß ein separater Kleberauftrag notwendig ist. Das beidseitige Haftklebeband ist von der CR-Kautschukschicht nicht mehr trennbar. Es wird eine temperaturbeständige Verbindung erreicht.

In vorteilhafter Ausgestaltung der Erfindung weist das Haftklebeband eine selbstklebende Klebermasse aus modifiziertem Acrylat auf. Das modifizierte Acrylat weist eine hohe Anfangsklebkraft bei sehr hoher Scherfestigkeit und hervorragender Alterungs-, Witterungs- und UV-Beständigkeit auf. Es ist darüber hinaus weitgehend resistent gegen Einfluß von Chemikalien und Lösemitteln.

In weiterer vorteilhafter Ausgestaltung der Erfindung ist zwischen der Hauptschicht und der Kontaktschicht eine dünne Zwischengummischicht aus SBR-Gummi angeordnet, die haftungserhöhende Mischungsbestandteile aufweist. Die Haftung zwischen der Hauptschicht und der Kontaktschicht wird verbessert.

Die Erfindung betrifft auch ein Müllfahrzeug mit einer rotierenden Trommel zur Aufnahme des Abfallgutes, die außen mit einem Entdröhnbelag belegt ist. Es ist bei Müllfahrzeugen bisher bekannt, die Außenflächen der Trommel mit einer Polyurethanschicht im Spritzverfahren zu belegen. Bei diesem Verfahren, das bei dem Fahrzeughersteller durchgeführt wird, entstehen zu hohe Lösungsmittelkonzentrationen, die eine gesundheitliche Gefährdung der Mitarbeiter bedeuten können.

Erfindungsgemäß ist die Trommel des Müllfahrzeuges mit einer Entdröhnbelagsbahn belegt, die gemäß den Merkmalen in Anspruch 4 aufgebaut ist. Die Entdröhnbelagsbahn ist über das Doppelklebeband fest auf der Außenfläche der Abfalltrommel verklebt und andererseits mit der Kontaktschicht temperatur- und witterungsbeständig verbunden. Der Entdröhnbelag der Abfalltrommel ist ohne umweltschädliche Lösungsmittel vom Fahrzeugausrüster aufbringbar. Die CR-Kontaktschicht macht eine Anrauhung einer Gummiplatte hinfällig.

Vorteilhafte Ausgestaltungen des erfindungsgemäßen Müllfahrzeuges werden in den Unteransprüchen 5 bis 8 gekennzeichnet.

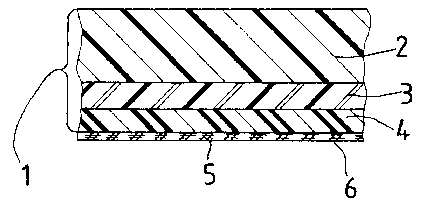

Anhand der Zeichnung wird nachstehend ein Ausführungsbeispiel der Erfindung näher erläutert.

Die gezeigte Entdröhnbelagsbahn weist eine Grundplatte 1 aus drei Gummischichten auf. Die Gummischicht 2 mit der größten Dicke besteht aus einem SBR-Kautschuk und ist mit einer Zwischengummischicht 3 aus einem modifizierten SBR-Kautschuk verbunden. An der SBR-Zwischengummischicht ist eine Kontaktschicht 4 aus CR-Gummi aufkalandriert. Alle drei miteinander durch Kalandrieren verbundenen Kautschukplatten 2, 3, 4 sind gemeinsam zusammenvulkanisiert.

Auf die freie Seite der Kontaktschicht 4 ist ein doppelseitiges Haftklebeband 5 selbstklebend aufgebracht, das auf seiner freien Seite von einer Folie 6 aus Silikonpapier abgedeckt ist. Als Träger weist das Haftklebeband 5 eine beidseitig mit der Klebermasse beschichtete PVC-Folie auf. Die selbsthaftende Klebermasse beinhaltet ein modifiziertes Acrylat.

Diese Entdröhnbelagsbahn ist in dem gewählten Ausführungsbeispiel 10 mm dick, wobei die SBR-Kautschukbahn 2 in einer Dicke von 8,5 mm ausgebildet ist.

Die Entdröhnbelagsbahn wird dem Anwender in einem Rollenwickel geliefert. Der Anwender zieht das Silikonpapier 6 bei der Verarbeitung ab und preßt die eventuell zugeschnittene Entdröhnbelagsbahn fest auf die zu dämmende Gehäusewand. Durch die Kontaktschicht 4 ist eine ausreichende Haftung zwischen dem Haftklebeband 5 und der übrigen Grundplatte 1 gewährleistet. Auf der anderen Seite ist durch den modifizierten Acrylatkleber eine ausreichende Haftung auf der Gehäusewand gegeben.

## Patentansprüche

1. Elastische Entdröhnbelagsbahn für Wände von schallabgebenden Gehäusen, insbesondere metallischen Gehäusewänden von Fahrzeugen oder Maschinen, die aus mehreren Schichten aufgebaut ist,
**dadurch gekennzeichnet,**
daß die Entdröhnbelagsbahn folgende Schichten aufweist:
1) eine Hauptschicht (2) aus SBR-Gummi,
2) eine mit der Hauptschicht (2) zusammenvulkanisierte Kontaktschicht (4) aus CR-Gummi,
3) ein mit der Kontaktschicht (4) verklebtes beidseitiges Haftklebeband (5), das auf der freien Seite mit einer abziehbaren Schutzfolie (6) versehen ist.

2. Entdröhnbelagsbahn nach Anspruch 1, dadurch gekennzeichnet, daß das Haftklebeband (5) eine selbstklebende Klebermasse aus modifiziertem Acrylat aufweist.

3. Entdröhnbelagsbahn nach Anspruch 1 oder 2, dadurch gekennzeichnet, daß zwischen der Hauptschicht (2) und der Kontaktschicht (4) eine dünne Zwischengummischicht (3) aus SBR-Gummi angeordnet ist, die haftungserhöhende Mischungsbestandteile aufweist.

4. Müllfahrzeug mit einer rotierenden Trommel zur Aufnahme des Abfallgutes, wobei die Abfalltrommel außen mit einem Entdröhnbelag belegt ist, dadurch gekennzeichnet, daß der Entdröhnbelag eine Schalldämmplatte ist, die folgende Schichten aufweist:
1) eine Hauptschicht (2) aus SBR-Gummi,
2) eine mit der Hauptschicht (2) zusammenvulkanisierte Kontaktschicht (4) aus CR-Gummi,
3) ein mit der Kontaktschicht (4) verklebtes beidseitiges Haftklebeband (5), das auf dem Außenmantel der Abfalltrommel aufgeklebt ist.

5. Müllfahrzeug nach Anspruch 4, dadurch gekennzeichnet, daß das Haftklebeband (5) eine selbstklebende Klebermasse aus modifiziertem Acrylat aufweist.

6. Müllfahrzeug nach Anspruch 4, dadurch gekennzeichnet, daß zwischen der Hauptschicht (2) und der Kontaktschicht (4) eine dünne Zwischengummischicht (3) aus SBR angeordnet ist.

7. Müllfahrzeug nach einem der Ansprüche 4 bis 6, dadurch gekennzeichnet, daß um die aufgeklebte Entdröhnbelagsbahn eine Metallummantelung aufgebracht ist.

8. Müllfahrzeug nach einem der Ansprüche 4 bis 7, dadurch gekennzeichnet, daß die Hauptschicht (2) us SBR auf der freien Außenseite einen Farbanstrich aufweist.
